# EUROPÄISCHE PATENTANMELDUNG

(11) **EP 0 598 298 A1**
(43) Veröffentlichungstag der Anmeldung: **25.05.1994**
(21) Anmeldenummer: 93118063.2
(22) Anmeldetag: 08.11.1993
(51) Int. Cl.: B29C 33/64, C08L 83/08, D21H 19/32, B29K 83/00

(54) **Trennmittel**

(30) Priorität: 19.11.1992 DE 4238881
(71) Anmelder: BAYER AG, 51368 Leverkusen (DE)
(72) Erfinder: Steinbach, Hans-Horst, Dr., D-51789 Lindlar (DE)

(57) **Zusammenfassung**

Trennmittellösung auf Basis Metalloxidgruppen-haltiger Polydiorganosiloxane und niedermolekularer Polydimethylsiloxane als Lösungsmittel.

## Beschreibung

Unter Trennmitteln werden feste oder flüssige Stoffe verstanden, die die Adhäsionskräfte zwischen zwei aneinandergrenzenden Oberflächen (z.B. Formteil/Form) verringern, d.h. ihr Verkleben verhindern, indem sie zwischen beiden Oberflächen einen leicht trennbaren Film bilden (Abhäsivmittel). An Trennmittel werden zusätzlich die Anforderungen gestellt, daß sie chemisch indifferent und temperaturstabil sind und ein gutes Spreitungsvermögen aufweisen.

Besonders hohe Anforderungen an die Trenneigenschaft wird bei Trennmitteln zur Verwendung in Formen zur Herstellung von Polyurethanformkörpern gestellt. Hierzu sind Trennmittel auf Basis Metalloxidgruppen-haltiger Polydiorganosiloxane in die Technik eingeführt (siehe z.B. GB-A 20 21 609).

Diese bekannten Trennmittel werden auf die Formen in Form von Losungen Metalloxidgruppen-haltiger Polydiorganosiloxane in Kohlenwasserstoffen oder halogenierten Kohlenwasserstoffen durch Sprühen, Tauchen, Streichen usw. auf die Form aufgebracht, wobei sich nach Verdunsten des Lösungsmittels die Abhäsivschicht aus dem Metelloxidgruppen- haltigen Polydiorganosiloxan ausbildet.

Während übliche Kohlenwasserstoff-Lösungsmittel wegen ihrer Brennbarkeit besondere Anforderungen an den Brandschutz stellen, werden halogenhaltige Lösungsmittel, die an sich unbrennbar sind, aus Umweltschutzgründen heute abgelehnt.

Ein Ersatz der üblichen Losungsmittel durch Oligomere der Poly-α-Olefine (Isopar®-Typen) führt nicht zum Ziel, da solche Produkte ein unzureichendes Verlaufen auf Metalloberflächen zeigen, indem tröpfchenförmige Ansammlungen des Silikons auf den Formenoberflächen zurückbleiben und sich Streifen des Trennmittels bilden.

Überraschenderweise wurde gefunden, daß niedrig-flüchtige Dimethylpolysiloxane, wie Hexamethyldisiloxan, Octamethyltrisiloxan, Octamethylcyclotetrasiloxan, Decamethylcyclopentasiloxan, usw., hervorragende Lösungsmittel für Silikon-Trennmittel darstellen, Überraschenderweise war es möglich, Metalloxid-haltige Polyorganosiloxane in den niedrig-flüchtigen Dimethylpolysiloxanen zu lösen, ohne daß das Lösungsmittel polymerisiert. Offenbar werden die Metallatome durch Einbau in die Siloxankette derart maskiert, daß sie nicht mehr als Polymerisationskatalysatoren wirksam werden.

Gegenstand der vorliegenden Erfindung sind daher Trennmittellösungen auf Basis Metalloxidgruppen-haltiger Polydiorganosiloxane und niedermolekularer Polydimethylsiloxane als Lösungsmittel.

Die Metalloxidgruppen-haltigen Polydiorganosiloxane werden in üblicher Weise durch Hydrolyse von Organohalogensilanen und anschließender katalytischer Polymerisation unter Einsatz üblicher mehrbasischer Metallester hergestellt. Als Ester geeignet sind z.B. Butyltitanat, Butylzirkonat, Butylzinndilaurat, Magnesiumethylat oder Aluminiumethylat. Der Einbau der Metalloxidgruppe in das Polydiorganosiloxan erfolgt z.B. durch Grignard-Reaktion. Der Gehalt an Metalloxidgruppen im Polysiloxan sollte so bemessen sein, daß pro Metalloxid etwa 1 bis 100 SiO-Gruppen vorliegen.

Als Lösungsmittel eignen sich insbesondere Hexamethyldisiloxan (M₂), Octamethyltrisiloxan (M₂D), Octamethylcyclotetrasiloxan (D₄) oder Decamethylcyclopentasiloxan (D₅).

Das Lösungsmittel kann in einer Menge von bis zu 90 Gew.-% der Trennmittellösung eingesetzt werden. Eine Lösungsmittelmenge von 70 Gew.-% ist im allgemeinen ausreichend. Aber auch geringe Zusätze von ca. 10 % an diesen Lösungsmitteln in der Trennmittellösung können die Verlaufeigenschaften stark verbessern. Besonders bevorzugt insbesondere für Polyurethangießharze ist ein Trennmittel, das aus α,ω-Hydroxypolydimethylsiloxan mit einer Viskosität von 200 bis 3000 cSt durch Reaktion mit 25 bis 45 Teilen Orthotitansäuretetrabutylester (bezogen auf 100 Teile Polydimethylsiloxan) erhalten wird, Nach Auflösung dieses Trennmittels in dem niedermolekularen Polydimethylsiloxan wird eine sowohl bei Raumtemperatur als auch bei 50°C über mehrere Wochen lagerstabile Lösung erhalten, die auf Metallformen hervorragend verläuft, Die aus solchen Formen erhaltenen Gießharzformkörper zeigen brillante glasklare Oberflächen ohne Riefen, Schlieren oder sonstige punktförmige Störungen, die durch Verlaufsfehler entstehen können.

Obwohl der bevorzugte Einsatz der erfindungsgemäßen Trennmittellösungen auf dem Gebiet der Metallformbeschichtungen für Kunststoff-Formkörper, insbesondere Polyurethanformkörper, liegt, sind die Trennmittellösungen ebenfalls hervorragend geeignet für den Einsatz in der Glasindustrie bei der Glasverformung, in der Bauindustrie als Entschalungsmittel, im Fassadenschutz als Antiplakatiermittel, in der Papierindustrie als Trennpapiere für selbstklebende Erzeugnisse, zur Imprägnierung von Mitlaufpapieren zur Folienherstellung, für den Transferdruck auf Textilien usw.

Je nach Einsatzzweck können die gelösten Metalloxidgruppen-haltigen Polyorganosiloxane Harze, wie sie durch Hydrolyse von Tri- oder Tetrachlorsilanen erhalten werden, sein, die mit Organozinnverbindungen kondensationskatalysiert sind oder lineare α,ω-Hydroxypolydiorganosiloxane die mit Metallsäureestrn äquilibriert sind, sein. Die Organogruppen des Siloxans sind vorzugsweise Methylgruppen. Je nach Einsatzzweck können aber auch Alkylgruppen mit 1 bis 14 C-Atomen, Cycloalkylgruppen oder Phenylgruppen eingesetzt werden.

### Beispiel 1

32 % eines Silikonharzes, das in der dem Fachmann bekannten Weise durch Hydrolyse von 103 kg Methyltrichlorsilan, 10 kg Dimethyldichlorsilan und 2 kg Trimethylmonochlorsilan unter Anwesenheit von N-Butanol hydrolysiert worden ist und anschließend mit dem Katalysator Dibutylzinndilaurat polymerisiert worden ist, werden mit 4 % α,ω-Hydroxydimethylpolysiloxan der Viskosität 100 cSt vermischt und in 64 % (bezogen auf die Lösung) Octamethylcyclotetrasiloxan gelöst. Man erhält ein lagerbeständiges, auf den Metalloberflächen hervorragend verlaufendes Trennmittel mit guter Wirksamkeit.

### Beispiel 2

100 eile Baysilone-Öl M 100 wrden mit 2 Teilen Aluminiumethylat und 2 Teile Magnesiummethylat vermischt, nach 40-minütigem Rühren mit 100 Teilen Hexamethyldisiloxan vermischt. Man erhält ein hervorragend verlaufendes Trennmittel für Metallformen, das bei der Polyurethantrennung besondere Vorteile bietet.

### Beispiel 3

Zu 28,8 Teilen eines α,ω-Hydroxypolydimethylsiloxans der Viskosität 1000 cSt werden 11,2 Teile Orthotitansäuretetrabutylester unter Rühren zugegeben. Dadurch erhält man einen Anstieg der Viskosität, der schließlich wieder auf 400 bis 200 cSt abfällt, Nach einstündigem Rühren werden 60 Teile Decamethylcyclopentasiloxan zugegeben und 10 Minuten nachgerührt. Man erhält ein auf der Oberfläche von Metallformen hervorragend verlaufendes Trennmittel, das eine besonders glatte und leichte Trennung von Polyurethanharzen ermöglicht.

Die Trennmittel, die nach den Beispielen 1 bis 3 hergestellt wurden, zeigten bei Lagerung im Trockenschrank von 50°C und im Labor bei RT nach 6 Wochen keine Neigung zur Polymerisation.

### Beispiel 4 Überprüfung der Trennwirkung

Für diesen Zweck werden Polyurethan-Schäume mit integraler Außenhaut aus handelsüblichem Polyetherpolyol und Isocyanat hergestellt. Die Formschäume haben eine Rohdichte von bis zu 600 kg/m³ , mindestens aber 45 kg/m³. Die Verschäumung wird in einer beheizbaren Form von 850 cm³ Volumen durchgeführt. Die Form besteht aus galvanisiertem Stahlblech.

Mit dem gemäß Beispiel 3 beschriebenen Trennmittel wird die Stahlform mittels einer Sprühanlage dünn eingesprüht. Die Temperatur der Form beträgt etwa 50°C. Anschließend werden die zur Herstellung des Polyurethan-Schaums benötigten Reaktionspartner eingebracht. Nach erfolgter Schäumung wird die Form nach einer Aushärtezeit von 5 Minuten geöffnet. Die Form läßt sich leicht öffnen, das geschäumte Teil löst sich sehr leicht von der Form und kann mühelos entnommen werden.

Nach einmaliger Behandlung der Form mit dem gemäß Beispiel 3 hergestellten Mittel können bis zu 7 Schäumungen durchgeführt werden, ohne daß der Trennmittelfilm erneuert werden muß. Das Trennmittel bildet in der Form keine Rückstände; aufgrund der guten Trennwirkung des erfindungsgemäßen Mittels bleiben keine Polyurethan-Rückstände in der Form zurück, die die Maßhaltigkeit der herzustellenden Formteile verändern würden.

## Patentansprüche

1. Trennmittellösung auf Basis Metalloxidgruppenhaltiger Polydiorganosiloxane und niedermolekularer Polydimethylsiloxane als Lösungsmittel.

2. Verwendung von niedermolekularen Polydimethylsiloxanen als Lösungsmittel für Trennmittel auf Basis Metalloxidgruppen-haltiger Polydiorganosiloxane.

3. Verfahren zur Herstellung eines Trennmittels auf Basis Metalloxidgruppen-haltiger Polydiorganosiloxane, dadurch gekennzeichnet, daß man
a) α,ω-Hydroxypolydiorganosiloxane mit einer Viskosität von 100 bis 10 000 cSt mit
b) einer Organometallverbindung vermischt und reagiert und das Reaktionsprodukt
c) in niedrigmolekularen Polydimethylsiloxanen löst.

4. Verfahren zur Herstellung eines Trennmittels auf Basis Metalloxidgruppen-haltiger Polydiorganosiloxane, dadurch gekennzeichnet, daß man
a) Silikonharze mit metallorganischen Polykondensationskatalysatoren polykondensiert und anschließend
b) in niedrigmolekularen Polydimethylsiloxanen löst.

5. Verfahren nach Anspruch 3 oder 4, dadurch gekennzeichnet, daß als Lösungsmittel Hexamethyldisiloxan oder Octamethyltrisiloxan eingesetzt werden.

6. Verfahren nach Anspruch 3 oder 4, dadurch gekennzeichnet, daß cyclische Siloxane wie Octamethylcyclotetrasiloxan oder Decamethylcyclopentasiloxan einzeln oder in einer Mischung als Lösungsmittel eingesetzt werden.

7. Verwendung der Trennmittel nach einem der Ansprüche 1 bis 6 zur Beschichtung von Metallformen zur Herstellung von Polyurethanformkörpern.
